(19)

**Europäisches Patentamt**
**European Patent Office**
**Office européen des brevets**

(11) **EP 4 575 419 A1**

(12) **EUROPEAN PATENT APPLICATION**

(43) Date of publication:
**25.06.2025 Bulletin 2025/26**

(51) International Patent Classification (IPC):
**G01F 1/44** (2006.01)    **B33Y 80/00** (2015.01)
**G01F 1/661** (2022.01)    **G01F 5/00** (2006.01)
**G01F 15/00** (2006.01)    **G01F 1/50** (2006.01)
**G01F 15/14** (2006.01)

(21) Application number: **23217857.4**

(22) Date of filing: **19.12.2023**

(52) Cooperative Patent Classification (CPC):
**G01F 1/44; B33Y 80/00; G01F 1/661; G01F 5/00;**
G01F 1/50; G01F 15/001; G01F 15/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sartorius Stedim Biotech GmbH**
**37079 Göttingen (DE)**

(72) Inventors:
• **REGEN, Thomas**
  **37079 Göttingen (DE)**
• **WAGNER, Eva**
  **37079 Göttingen (DE)**
• **LUDOLPH, Niclas**
  **37079 Göttingen (DE)**
• **MAIER, Friedrich**
  **37079 Göttingen (DE)**

(74) Representative: **Prinz & Partner mbB**
**Patent- und Rechtsanwälte**
**Rundfunkplatz 2**
**80335 München (DE)**

(54) **A TUBULAR FLOW DEVICE FOR ENABLING CONTROLLED FLOW OF A FLUID AT A MEASURING POINT**

(57)    A tubular flow device (10) for enabling controlled flow of a fluid at a measuring point comprises an inlet flow channel (14) defining a main inflow direction, and an outlet flow channel (18) defining a main outflow direction. The flow device (10) further comprises a branching portion (22) where the inlet flow channel (14) is divided into a primary flow channel (24) and a secondary measurement channel (26), and a joining portion (36) where the primary flow channel (24) and the secondary measurement channel (26) open into the outlet flow channel (18). The measuring point is located in the secondary measurement channel (26). The primary flow channel (24) is longer than the secondary measurement channel (26) and has a constriction (42) downstream of the branching portion (22). A fluid entering the inlet flow channel (14) is divided into a primary flow flowing into the primary flow channel (24) and a secondary measurement flow flowing into the secondary measurement channel (26). The primary flow and the secondary measurement flow reach the joining portion (36) essentially at the same time, due to the Venturi effect caused by the constriction (42) of the primary flow channel (24).

Fig. 1

**Description**

The invention relates to a tubular flow device for enabling controlled flow of a fluid at a measuring point.

In order to characterize, monitor or even control bioprocesses and subsequent purification steps of the product from the bioprocess, measurement systems or sensors are used to determine one or more specific parameters at given locations. Ideally, the measurement systems or sensors are integrated into the flow-through system of the process set-up, thus enabling the determination of the parameters without the need for sampling.

Certain measuring methods require a specific geometry of the measuring point that does not necessarily match the internal geometry of the rest of the flow-through system. For example, certain optical measurement methods, especially spectroscopic measurements, require a defined small distance between two surfaces between which optical measurement takes place. This distance can be significantly smaller than the inner diameter of the rest of the flow system.

When the fluid is to flow through a very narrow passage at the measuring point, an abrupt constriction in the flow system is to be avoided since this would lead to increased pressure at the constriction and high shear forces that could damage the cells and/or the product from the bioprocess.

In order to avoid increased pressure and/or increasing shear forces in the area of a measuring point that is narrower than the rest of the flow-through system, the flow in the area of the measuring point can be divided into two separate flows: a primary flow, which contains a large part of the mass flow, and a secondary measurement flow, which passes the measuring point.

However, in flow-through systems that are divided into a wider primary flow and a narrower secondary measurement flow, the problem may arise that the average flow velocity of the secondary measurement flow is significantly lower than that of the primary flow, mainly because no proper flow is established in the narrow measurement channel due to the relatively high flow resistance. Thus, the fluid that is made accessible to the measurement in the secondary measurement flow is not necessarily representative of the fluid that passes through in the primary flow at the same time. The time-delay of the secondary measurement flow relative to the primary flow, which is difficult to determine by the user, may lead to inaccurate conclusions about the fluid medium in the process, which means that the measuring and subsequent analysis procedure does not allow proper real-time monitoring and control of the process. In the worst case, effects are noticed with such a time-delay that it is already too late to take effective countermeasures. A control loop would then be impossible.

The above problem is solved by a tubular flow device for enabling controlled flow of a fluid at a measuring point according to claim 1. Advantageous and expedient embodiments of the invention are apparent from the dependent claims.

The invention provides a tubular flow device for enabling controlled flow of a fluid at a measuring point, comprising an inlet flow channel defining a main inflow direction, and an outlet flow channel defining a main outflow direction. The flow device further comprises a branching portion where the inlet flow channel is divided into a primary flow channel and a secondary measurement channel, and a joining portion where the primary flow channel and the secondary measurement channel open into the outlet flow channel. The measuring point is located in the secondary measurement channel. The primary flow channel is longer than the secondary measurement channel and has a constriction downstream of the branching portion. A fluid entering the inlet flow channel (with a given input flow rate) is divided into a primary flow flowing into the primary flow channel and a secondary measurement flow flowing into the secondary measurement channel. The primary flow and the secondary measurement flow reach the joining portion essentially at the same time, due to the Venturi effect caused by the constriction of the primary flow channel.

The invention is based on the finding that the Venturi effect can be used advantageously in a scenario where the flow in the secondary measurement channel would be significantly slower than in the primary flow, to align the primary and secondary flows so that the fluid medium in the secondary measurement flow passing the measuring point does not have a significant time-delay compared to the primary flow. In particular, the invention balances the velocities and pressure differences in the tubular flow device in such a manner that the parting of the fluid, which enters the inlet flow channel with a given input flow rate, into a primary flow and a secondary measurement flow does not result in a time-delay of the secondary measurement flow. Based on the given input flow rate of the incoming fluid, the geometries of the primary flow channel and the secondary measurement channel, especially the course of the dimensions of the transverse cross-sections over the length of the channels, can be designed such that the pressure loss that occurs due to the restriction of the primary flow channel causes a suitable secondary measurement flow with a sufficient average velocity (entraining effect). Yet it is possible to design the primary and the secondary measurement flow channels such that - for a given (range of the) input flow rate - flow conditions are established that do not exert high shear forces or other negative influences on the cells or other substances in the fluid medium.

In view of preferred applications of the invention, the secondary measurement channel preferably includes an interface for optical measurements at the measuring point. Optical measurements can be spectroscopic measurements at specific wavelengths or the recording of spectra, which require a suitable light source and a detector, or turbidity measurements, for example. Of course, it is also possible to provide other types of interfaces for other kinds of measurements at the measuring point.

In view of the desired pressure difference over the secondary measurement channel, it is most efficient that the constriction of the primary flow channel is close to or at the joining portion where both the primary flow channel and the secondary measurement channel open into the outlet flow channel.

According to a preferred design of the flow device, the secondary measurement channel has an inlet within the inlet flow channel, i.e. the inlet is surrounded by the inlet flow channel with the surrounding portion serving as an inlet of the primary flow channel.

Likewise, the secondary measurement channel preferably has an outlet within the outlet flow channel, i.e. the outlet is surrounded by the outlet flow channel.

With such a design unwanted side flow effects are avoided in the best possible manner.

According to a special aspect of the invention, the transverse cross-section area of the primary flow channel at the constriction is determined by the following formula:

$$\Delta p = \frac{1}{2} \cdot \rho \cdot \left( \left( \frac{A_1}{A_2} \right)^2 - 1 \right) \cdot v_1^2$$

wherein $\Delta p$ is the pressure difference of the fluid between a point in the primary flow channel upstream of the constriction and the narrowest point of the constriction, $\rho$ is the density of the fluid, $v_1$ is the fluid velocity at the point upstream of the constriction, $A_1$ is the transverse cross-section area at the point upstream of the constriction, and $A_2$ is the transverse cross-section area at the narrowest point of the constriction.

Under the assumption that the input flow rate at the point upstream of the constriction is known, a desired pressure drop between the two points can be determined that is necessary to establish a suitable flow in the secondary measurement channel. Based on this pressure difference, the transverse cross-section area of the primary flow channel at the constriction can be calculated. It is to be understood that the formula provides a theoretical target value for ideal conditions; accordingly, in most cases the real cross-section area will not exactly match the calculated value.

With respect to typical input flows entering the flow device at the inlet flow channel, it has turned out that reducing the primary flow channel to 20 % to 40 % provides the best results in view of the desired pressure drops. In other words, the transverse cross-section area of the primary flow channel at the constriction should be 20 % to 40 %, preferably about 25 % to 35 %, of the transverse cross-section area of the primary flow channel at the branching portion.

Especially optical interfaces for optical measurements require that the secondary measurement channel is generally narrower than the primary flow channel.

According to an advantageous aspect of the invention, the narrow secondary measurement channel is essentially straight, and more preferably also extends along the inflow direction. A straight course without any significant bends or curves facilitates the flow through the narrow secondary measurement channel.

In order to adapt the timing of the primary flow to the secondary measurement flow, the primary flow channel with the constriction is preferably curved and guided around the secondary measurement channel.

Especially in view of optical measurements requiring a small measuring distance it is beneficial that at least the section of the secondary measurement channel in which the measurement interface is located has an essentially constant transverse cross-section so that the secondary measurement flow is not impeded.

Moreover, in view of typical optical elements used for optical measurements which have a non-circular, flat through-flow passage, the secondary measurement channel also has a non-circular, preferably an essentially rectangular, transverse cross-section at the measuring point. However, depending on the measuring equipment, the transverse cross-section can have other shapes, such as the shape of a circle or an ellipse.

For an easy integration of the flow device into a fluid line of a bioprocess device arrangement the inlet and outlet flow channels should include connecting portions for connecting the inlet and outlet flow channels to respective ends of the fluid line.

Since the fluid lines that are used in bioprocess device arrangement typically have a standard inner diameter, the inner diameters of the connecting portions should be adapted to such a standard inner diameter, and, accordingly, the inner diameters of the connecting portions should essentially be the same.

Since the invention may require rather complex channel geometries, it is preferred that at least a portion of the flow device including the primary flow channel and the secondary measurement channel is produced by 3D-printing, especially when the flow device is configured as a single-use device. However, if possible, the channels can also be produced by injection molding or similar methods. If the flow device is to be re-used several times, it can be made from stainless steel, for example.

Further features and advantages of the invention will become apparent from the following description and from the accompanying drawings to which reference is made. In the drawings:

- Figure 1 shows a longitudinal cross-section of a tubular flow device according to a first embodiment of the invention;

- Figure 2 shows a longitudinal cross-section of a tubular flow device according to a second embodiment of the invention; and

- Figure 3 shows a longitudinal cross-section of a tubular flow device according to a third embodiment of the invention.

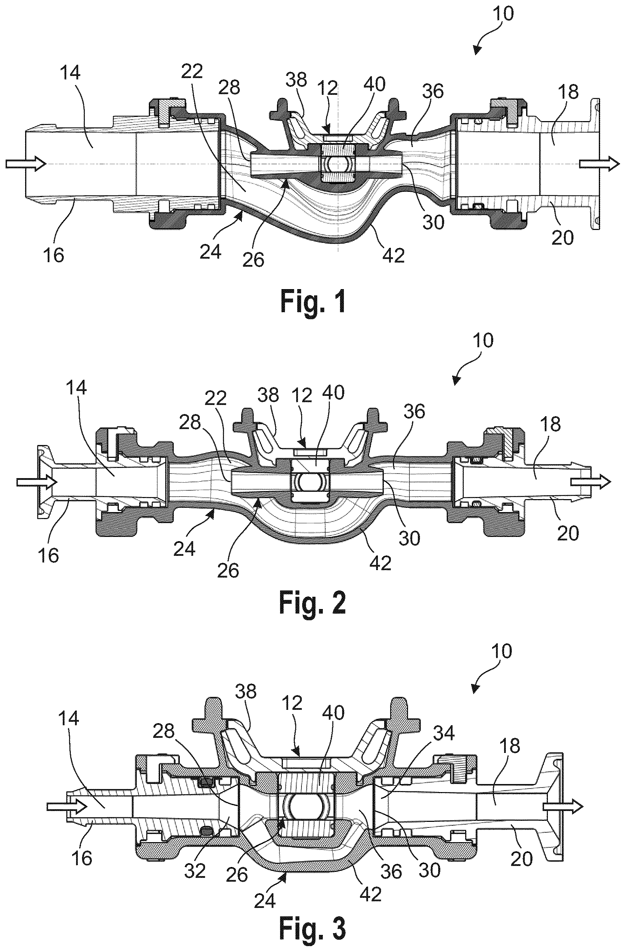

In Figures 1, 2 and 3 different embodiments of a tubular flow device 10 for enabling controlled flow of a fluid at a measuring point are shown (at different scales). The basic set-up of the embodiments is similar, but the dimensions and the shapes of the individual components and flow sections differ. Yet all of the embodiments provide the same optical measurement interface 12, thus allowing the same measurement equipment to be used. This will be explained in more detail further below.

The flow device 10 includes an inlet flow channel 14 with a first connecting portion 16 and an outlet flow channel 18 with a second connecting portion 20. The connecting portions 16, 20 are adapted to be connected with matching connecting portions of a main fluid line of a bioprocess device arrangement (not shown), so that the flow device 10 can be integrated into the main fluid line. For connecting the flow device 10 further components such as clamps or connectors may be used.

The inlet and outlet flow channels 14, 18 define main inflow and outflow directions, respectively, which coincide with the main flow direction of the main fluid line. The inflow and outflow directions are represented by arrows in the Figures. The flow directions also define a longitudinal direction of the flow device 10.

Since the main fluid line typically comprises hoses or pipes having a constant circular transverse cross-section over their length with a standard inner diameter, the connecting portions 16, 20 of the flow device 10 are adapted to such a transverse cross-section. This means that the inner diameters of the connecting portions 16, 20 both match the standard inner diameter of the main fluid line. In particular, the inner diameters of the connecting portions 16, 20 of the three embodiments shown in Figures 1, 2 and 3 correspond to the standard inner diameters 1" (25.4 mm), 3/8" (9.53 mm) and 1/4" (6.35 mm), respectively, which are typically used in the labs, especially in single-use systems.

The inlet flow channel 14 includes a branching portion 22 where the inlet flow channel 14 is divided into a primary flow channel 24 and a secondary measurement channel 26.

In the first and second embodiments shown in Figure 1 and Figure 2, respectively, an inlet 28 of the secondary measurement channel 26 is formed within the inlet flow channel 14, i.e. the inlet 28 of the secondary measurement channel 26 is surrounded by the inlet flow channel 14. The surrounding portion corresponds to an inlet of the primary flow channel 24.

In the first and second embodiments the secondary measurement channel 26 has an outlet 30 formed within the outlet flow channel 18 of the flow device 10, i.e. the outlet 30 of the secondary measurement channel 26 is surrounded by the outlet flow channel 18. The surrounding portion corresponds to an outlet of the primary flow channel 24.

In the third embodiment, as shown in Figure 3, it is an inlet of the primary flow channel 24 that branches off from the widened inlet 28 of the secondary measurement channel 26 which is adapted to an adjoining widened section 32 of the inlet flow channel 14. Likewise, an outlet of the primary flow channel 24 joins the widened outlet 30 of the secondary measurement channel 26 which is adapted to an adjoining widened section 34 of the outlet flow channel 18.

In all of the embodiments, the outlets of the primary flow channel 24 and the secondary measurement channel 26 are located in a joining portion 36 and open into the outlet flow channel 18 of the flow device 10.

The secondary measurement channel 26 (apart from the widened inlet 28 and outlet 30 of the third embodiment) is essentially straight and extends along the inflow direction. The secondary measurement channel 26 includes a measurement interface 12 for optical measurements, thus defining a measuring point. At least the section of the secondary measurement channel 26 close to the measurement interface 12 has an essentially constant transverse cross section, which is preferably rectangular.

The measurement interface 12 includes a receptacle 38 for accommodating and sealing an optical component 40 used for optical measurements. For example, the optical component 40 may include a lens holder cube, a lens holder lid, and a flow-through passage between two lenses held in the lens holder cube to which the rectangular transverse cross-section of the secondary measurement channel 26 is adapted to. Such an optical component 40 is suitable for spectroscopic measurements, especially UV-Vis or Raman spectroscopy, with a light source and a detector.

It is to be noted that in all three embodiments the measurement interface 12 is the same, so that the same optical component 40 can be used with each of the embodiments.

Contrary to the secondary measurement channel 26, the primary flow channel 24 is curved, and thus longer than the secondary measurement channel 26. The primary flow channel 24 has a constriction (narrow section) 42 downstream of the branching portion 22, close to or at the joining portion 36. As viewed in flow direction, which is indicated by the arrows in the Figures, the constriction 42 provides a smooth (not abrupt) decrease and increase of the transverse cross-section area of the primary flow channel 24. It is to be noted that the decrease and the increase of the transverse cross-section perpendicular to the flow direction is not visible in the Figures since they show longitudinal cross-sections of the flow device 10.

As a general rule for all of the embodiments, the transverse cross-section area of the primary flow channel 24 at the constriction 42 is about 20 % to 40 % of the transverse cross-section area of the primary flow channel 24 at the branching portion 22. Preferably, the transverse cross-section area is reduced to about 25 % to 35 % at the narrowest point.

The flow device 10 may be composed of several separate pieces that need to be assembled before use. Especially the pieces including complex channel geometries are preferably produced as single-use components by 3D-printing, using PA 12 as printing material, for example. However, the channels can also be produced from stainless steel.

In the following, the design and working principles of the flow device 10 will be described.

Fluid entering the inlet flow channel 14 of the flow device 10 with a given input flow rate is divided at the branching portion 22 into a primary flow flowing into the primary flow channel 24 and a secondary measurement flow flowing into the secondary measurement channel 26. At least in the first and second embodiments the secondary measurement flow is impeded as little as possible relative to the overall flow entering from the main fluid line into the flow device 10 at the inlet flow channel 14, and the secondary measurement flow is passed directly to the measuring point and then fed back to the primary flow.

Although the primary flow channel 24 is longer and wider than the secondary measurement channel 26, the primary flow and the secondary measurement flow reach the joining portion 36 essentially at the same time. This is achieved due to the Venturi effect caused by the constriction 42 of the primary flow channel 24.

Generally, the Venturi effect describes the phenomenon of fluid dynamics in a constricted flow path. When a fluid flows through a constricted section, the speed of the fluid increases while its pressure decreases. When the fluid leaves the constriction 42, i.e. when the fluid path widens, the speed of the fluid decreases while its pressure increases. The pressure difference $\Delta p$ can be calculated with the following formula

$$\Delta p = \frac{1}{2} \cdot \rho \cdot \left( \left( \frac{A_1}{A_2} \right)^2 - 1 \right) \cdot v_1^2$$

where $\rho$ is the density of the fluid, $v_1$ is the (slower) fluid velocity upstream of the constriction 42, $A_1$ is the transverse cross-section area upstream of the constriction 42, and $A_2$ is the transverse cross-section area at the narrowest point of the constriction 42.

Since not only the density of the fluid and the transverse cross-section areas are known, but also the velocity of the fluid upstream of the constriction 42 is either known or can be calculated based on the known flow in the main fluid line, the pressure drop caused by the constriction 42 can be determined.

The primary flow channel 24 and the secondary measurement channel 26 are designed such that, based on the given input flow rate at the inlet flow channel 14, the pressure decrease caused by the constriction 42 in the primary flow channel 24 due to the Venturi effect exerts an "entraining effect" at the outlet 30 of the secondary measurement flow channel that is strong enough to increase the average velocity of the secondary measurement flow, so that portions of the primary flow and the secondary measurement flow, after being separated from the main flow in the branching portion 22, reunite at about the same time in the joining portion 36. In other words: The constriction 42 of the primary flow channel 24 causes a pressure gradient between the inlet 28 and the outlet 30 of the secondary measurement channel 26 which ensures that a suitable flow is generated through the secondary measurement channel 26.

Based on the above-explained principles, the channel geometries can be designed such that the desired effect of reuniting the primary flow and the secondary measurement flow in the joining portion 36 at the same time can be achieved even with a certain range of input flow rates. For example, the first embodiment, which is compatible with a 1" main fluid line, provides appropriate results for input flow rates in the range of about 14 ml/min and 16000 ml/min, and the second embodiment, which is compatible with a 3/8" main fluid line, provides appropriate results for input flow rates in the range of about 14 ml/min and 5560 ml/min.

The measurements made at the measurement point can thus be used for a proper real-time monitoring and/or controlling of the running process.

This resulting designs of the flow device 10 can be incorporated into a modular grid concept like the one disclosed in EP 4 257 669 A1.

In principle, the flow device 10 can be used in connection with all in-line and on-line measuring systems that require a division of the fluid flow into at least two fluid flows in order to make a characteristic quantity of the fluid measurable. Examples of such measuring methods include spectroscopy (Raman, UV-Vis, Vis, NIR), (confocal) microscopy, other optical measurement methods (MALS, DLS, etc.), electrical measurements (capacitance, conductivity, etc.).

List of Reference Signs

    10 flow device
    12 measurement interface
    14 inlet flow channel
    16 first connecting portion
    18 outlet flow channel
    20 second connecting portion
    22 branching portion
    24 primary flow channel
    26 secondary measurement channel
    28 inlet of the secondary measurement channel
    30 outlet of the secondary measurement channel
    32 widened section of the inlet flow channel
    34 widened section of the outlet flow channel
    36 joining portion

38 receptacle
40 optical component
42 constriction

## Claims

1. A tubular flow device (10) for enabling controlled flow of a fluid at a measuring point, the flow device (10) comprising

   an inlet flow channel (14) defining a main inflow direction,
   an outlet flow channel (18) defining a main outflow direction,
   a branching portion (22) where the inlet flow channel (14) is divided into a primary flow channel (24) and a secondary measurement channel (26), and
   a joining portion (36) where the primary flow channel (24) and the secondary measurement channel (26) open into the outlet flow channel (18),
   the measuring point being located in the secondary measurement channel (26),
   the primary flow channel (24) being longer than the secondary measurement channel (26),
   the primary flow channel (24) having a constriction (42) downstream of the branching portion (22),
   so that a fluid entering the inlet flow channel (14) is divided into a primary flow flowing into the primary flow channel (24) and a secondary measurement flow flowing into the secondary measurement channel (26), the primary flow and the secondary measurement flow reaching the joining portion (36) essentially at the same time, due to the Venturi effect caused by the constriction (42) of the primary flow channel (24).

2. The flow device (10) according to claim 1, **characterized in that** the secondary measurement channel (26) includes an interface (12) for optical measurements at the measuring point.

3. The flow device (10) according to claim 1 or 2, **characterized in that** the constriction (42) of the primary flow channel (24) is close to or at the joining portion (36).

4. The flow device (10) according to any of the preceding claims, **characterized in that** the secondary measurement channel (26) has an inlet (28) within the inlet flow channel (14).

5. The flow device (10) according to any of the preceding claims, **characterized in that** the secondary measurement channel (26) has an outlet within the outlet flow channel (18).

6. The flow device (10) according to any of the preceding claims, **characterized in that** the transverse cross-section area of the primary flow channel (24) at the constriction (42) is determined by the following formula:

$$\Delta p = \frac{1}{2} \cdot \rho \cdot \left( \left( \frac{A_1}{A_2} \right)^2 - 1 \right) \cdot v_1^2$$

   wherein $\Delta p$ is the pressure difference of the fluid between a point in the primary flow channel upstream of the constriction (42) and the narrowest point of the constriction (42), $\rho$ is the density of the fluid, $v_1$ is the fluid velocity at the point upstream of the constriction (42), $A_1$ is the transverse cross-section area at the point upstream of the constriction (42), and $A_2$ is the transverse cross-section area at the narrowest point of the constriction (42).

7. The flow device (10) according to any of the preceding claims, **characterized in that** the transverse cross-section area of the primary flow channel (24) at the constriction (42) is about 20 % to 40 %, preferably about 25 % to 35 %, of the transverse cross-section area of the primary flow channel (24) at the branching portion (22).

8. The flow device (10) according to any of the preceding claims, **characterized in that** the secondary measurement channel (26) is narrower than the primary flow channel (24).

9. The flow device (10) according to any of the preceding claims, **characterized in that** the secondary measurement channel (26) is essentially straight.

10. The flow device (10) according to any of the preceding claims, **characterized in that** the secondary measurement channel (26) extends along the inflow direction.

11. The flow device (10) according to any of the preceding claims, **characterized in that** the primary flow channel (24) is curved.

12. The flow device (10) according to any of the preceding claims, **characterized in that** at least the section of the secondary measurement channel (26) close to the measurement interface (12) has an essentially constant transverse cross-section.

13. The flow device (10) according to any of the preceding claims, **characterized in that**, at the measuring point, the secondary measurement channel (26) has a non-circular, preferably an essentially rectangular, transverse cross-section.

14. The flow device (10) according to any of the preceding claims, **characterized in that** the inlet and outlet flow channels (14, 18) include connecting portions (16, 20) for connecting the inlet and outlet flow channels (14, 18) to a fluid line of a bioprocess device arrangement.

15. The flow device (10) according to claim 14, **characterized in that** the inner diameters of the connecting portions (16, 20) are essentially the same.

16. The flow device (10) according to any of the preceding claims, **characterized in that** at least a portion of the flow device (10) including the primary flow channel (24) and the secondary measurement channel (26) is 3D-printed.

Fig. 1

Fig. 2

Fig. 3

# EUROPEAN SEARCH REPORT

**Application Number**

EP 23 21 7857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 790 888 A (FERRIS WALTER [US]) 30 May 1905 (1905-05-30) * figure 4 * | 1-8,10, 12-16 | INV. G01F1/44 B33Y80/00 G01F1/661 |
| X | US 4 282 751 A (BROWN JAMES M ET AL) 11 August 1981 (1981-08-11) * figures 2,6 * | 1,2,4-7, 9-13,16 | G01F5/00 G01F15/00 G01F1/50 G01F15/14 |

**TECHNICAL FIELDS SEARCHED (IPC)**

G01F
B33Y

The present search report has been drawn up for all claims

| Place of search | Date of completion of the search | Examiner |
|---|---|---|
| The Hague | 21 June 2024 | Rambaud, Dilek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 7857

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | | Publication date | Patent family member(s) | | Publication date |
|---|---|---|---|---|---|
| US 790888 | A | 30-05-1905 | NONE | | |
| US 4282751 | A | 11-08-1981 | DE | 3032633 A1 | 19-03-1981 |
| | | | JP | S5636019 A | 09-04-1981 |
| | | | US | 4282751 A | 11-08-1981 |

EPO FORM P0459

For more details about this annex : see Official Journal of the European Patent Office, No. 12/82

**REFERENCES CITED IN THE DESCRIPTION**

**Patent documents cited in the description**

- EP 4257669 A1